Europäisches Patentamt

(19) European Patent Office

Office européen des brevets

(11) Publication number : **0 322 439 B1**

## (12) EUROPEAN PATENT SPECIFICATION

(45) Date of publication of patent specification :
27.11.91 Bulletin 91/48

(51) Int. Cl.⁵ : **B01D 33/21**

(21) Application number : **88906191.7**

(22) Date of filing : **22.06.88**

(86) International application number :
**PCT/SE88/00350**

(87) International publication number :
**WO 88/10145 29.12.88 Gazette 88/28**

(54) **ARRANGEMENT AT ROTATING FILTERS FOR IMPROVED FILTRATE DISCHARGE.**

(30) Priority : **24.06.87 SE 8702619**

(43) Date of publication of application :
**05.07.89 Bulletin 89/27**

(45) Publication of the grant of the patent :
**27.11.91 Bulletin 91/48**

(84) Designated Contracting States :
**AT DE FR GB SE**

(56) References cited :
**SE-B- 431 405**
**US-A- 4 634 529**

(73) Proprietor : **Nilsson, Bjarne**
**Lanterngatan 9**
**S-462 00 Vänersborg (SE)**

(72) Inventor : **Nilsson, Bjarne**
**Lanterngatan 9**
**S-462 00 Vänersborg (SE)**

(74) Representative : **Modin, Jan et al**
**c/o Axel Ehmers Patentbyra AB Box 10316**
**S-100 55 Stockholm (SE)**

Jouve, 18, rue Saint-Denis, 75001 PARIS

EP 0 322 439 B1

## Description

The present invention relates to a disk including a plurality of rotatable, axially spaced annular filter disks adapted to be partially immersed in a liquid or a suspension to be filtered, each disk comprising a plurality of filter elements which are in communication with axial filtrate conduits arranged at the outer peripheries of the annular disks for discharge of filtrate.

A filter of this kind is described, a.o., in the Patent Specification SE-C-8305817-2 and in the corresponding EP-B1-0160069 and US-A-4 634 529. The axial filtrate conduits of this filter are provided with the re-flow barriers for preventing so called "backwash", i.e. re-wetting of a filter cake, such as dewatered fibres, deposited on the filter elements, due to the filtrate from the filtrate conduits running back again to the filter elements.

The object of the present invention is to improve a filter of the kind sated in the introduction, so that the filtrate flow speed in its axial filtrate conduits is increased to a great degree. Possible re-flow barriers will thus be more effective or can be completely dispensed with.

This has been achieved by the invention having been given the distinguishing features disclosed in the following claims.

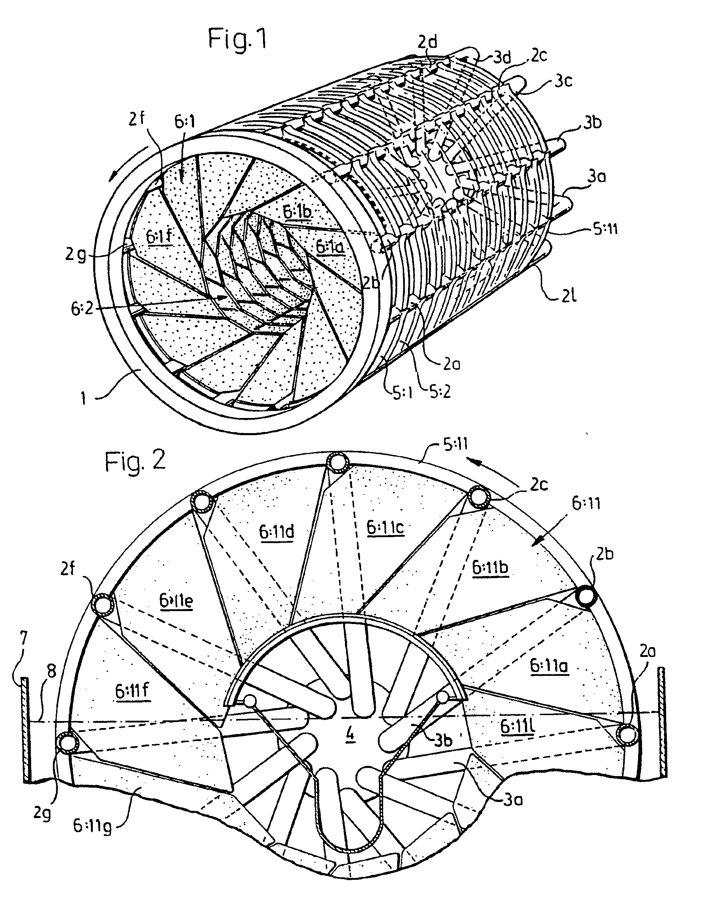

The invention will be described in the following with reference to the accompanying drawing, in which figure 1 is a perspective view of a filter rotor, and figure 2 is a section through the rotor to a large scale taken in a drection towards tis outlet end.

The filter rotor illustrated in figure 1 has at one end an exteriorly smooth ring 1 which is carried by non-illustrated bearing rollers. From the ring 1 there extend substantially axial filtrate conduits 2a, 2b 2c etc. which are fastened in the ring and, at the end of the rotor facing away from the ring 1, merge into substantially radially directed filtrate conduits 3a, 3b, 3c etc. These are terminated in a valve means 4, through which the radial filtrate conduits 3 and thereby the corresponding axial filtrate conduits 2 are put into communication one after the other with a suction discharge system for the filtrate. The axial filtrate conduits 2 are connected by parallel annular filter disk holders 5:1, 5:2, 5:3 ... 5:11, which carry annular filter disks 6:1, 6:2, 6:3 ... 6:11. Each filter disk, e.g. the disk 6:1, comprises a plurality of filter elements 6:1a, 6:1b etc., each of which has an unillustrated filtrate outlet being in communication with an axial filtrate conduit 2 via a filter disk holder 5. Reckoned in the direction of rotation (the arrow A) of the filter rotor, the arrangement is such, that a filter element, e.g. the element 6:1a, has communication via the filter disk holder 5:1 solely with the following axial filtrate conduit 2a, the filter element 6:1b only with the conduit 2b, etc.

In figure 2 the filter rotor is illustrated as being immersed in a vessel 7 containing a liquid to be filtered. The liquid surface is denoted by 8. A collection through 9 extends through all the filter disks. The vale means 4 is adapted such that the sub-pressure is maintained in a radial filtrate conduit and its connected axial filtrate conduit when a filter element is approximately in a position assumed by the filtrate conduit 2f and the element 6:11f in figure 2. The sub-pressure is maintained approximately to the position assumed by the filtrate conduit 2b and the element 6:11b.

It is important that the filtrate is rapidly led away around the positions assumed by the axial filtrate conduits 2a and 2b, so that it no longer remains in the conduits when these rise further, in order to prevent the risk of it running back again to the associated filter element, which could possibly take place from the conduit 2b to the element 6:11b as well as from the conduit 2c to the element 6:11c in figure 2. In accordance with the invention, therefore, the axial filtrate conduits slope towards the outlet end during the critical part of the time they convey the filtrate, namely within the region closest before and after they leave the liquid surface (the region approximately between four and twelve o'clock in figure 2). This has been achieved by the entire filter rotor being twisted such that, in the direction of rotation, a filter element such as the element 6:1a is somewhat in advance of the filter element of an adjacent filter disk 6:2 connected to the same axial filtrate conduit 2. Effective emptying of the axial filtrate conduits is accelerated by the slope towards the outlet end, this action being further increased by also the respective connecting radial filtrate conduits sloping downwards towards the valve means 4, see for instance the radial filtrate conduit 3b connected to the axial filtrate conduit 2b.

This twist of the filter rotor results in the further advantage that when the filter elements are lowered below the liquid surface 8 in the vessel 7, the elements at the end facing away from the outlet end are lowered before the elements closer to the outlet end. Accordingly, the sections connected to the axial filtrate conduit 2f are lowered in the order 6:1f, 6:2f ... 6:11f. The axial filtrate conduit 2f thus slopes upwards towards the outlet end, resulting in that any air in the conduit is sussecively pushed away be the filtrate on its way towards the outlet end.

## Claims

1. A disk filter, including a plurality of rotatable, axially spaced annular filter disks (6:1-6:11) adapted to be partially immersed in a liquid or a suspension to be filtered, each disk comprising a plurality of filter elements (6:1a-f ... 6:11a-f) which are in communication with axial filtrate conduits (2a-21) arranged at the outer peripheries of the annular disks for discharge of filtrate, **characterized** in that a filter element (6:1a) of a filter disk (6:1) is displaced relative a filter element (6:2a) of the following filter disk (6:2), as counted in the flow direction in the axial filtrate conduits, so that, counted in the direction of rotation, the first mentioned filter element is in advance of the later mentioned filter element and so that the axial filtrate conduit (2a) to which these two filter elements are connected inclines downwards in the flow direction when the two filter elements rise above the liquid surface.

2. A disk filter as claimed in claim 1, wherein each axial filtrate conduit is connected to a substantially radial filtrate conduit in the outlet end of the filter, **characterized in** that each radial filtrate conduit (3a-31) also slopes downwards in the flow direction when the filter elements connected to the associated axial filtrate conduit rise above the liquid surface.


**Patentansprüche**

1. Scheibenfilter, der eine Mehrzahl von drehbaren, mit axialen Zwischenräumen zueinander angeordneten, ringförmigen Filterscheiben (6:1-6:11) umfasst, die so ausgelegt sind, dass sie teilweise im eine zu filternde Flüssigkeit oder Suspension eintauchbar sind, wobei jede Scheibe eine Mehrzahl an Filterelememten (6:1a-f ... 6:11a-f) umfasst, die mit axial gerichteten, am äusseren Umfang der ringförmigen Scheiben angeordneten Filtratleiturngen (2a-21) zum Filtratabfluss verbunden sind, dadurch gekennzeichnet, dass eim Filterelement (6:1a) einer Filterscheibe (6:1) relativ zu einem Filterelement (6:2a) der folgenden Filterscheibe (6:2) - bezogen auf die Flussrichtung der axialen Filtratleitungenversetzt ist, so dass sich - bezogen auf die Drehrichtung - das zuerst erwähnte Filterelement vor dem später erwähnten Filterelement befindet und so, dass die axiale Filtratleitung (2a), an die diese zwei Filterelemente angeschlossen sind, in Flussrichtung nach Lunten geneigt ist, wenn die beiden Filterelemente über die Flüssigkeitsoberfläche aufsteigen.

2. Scheibenfilter nach Anspruch 1, bei dem jede axiale Filtratleitung an eine im Wesentlichen radiale Filtratleitung im Auslassende des Filters angeschlossen ist, dadurch gekennzeichnet, dass sich jede radiale Filtratleitung (3a-31) ebenfalls in der Flussrichtung nach unten neigt, wenn die an die zugehörigen axialen Filtratabflüsse angeschlossenen Filterelemente über die Flüssigkeitsoberfläche aufsteigen.


**Revendications**

1. Filtre à disques comportant plusieurs disques de filtration annulaires, rotatifs et espacés axialement (6:16:11), adaptés de façon à être partiellement immergés dans un liquide ou une suspension à filtrer, chaque disque comportant plusieurs éléments filtrants (6:1a-f...6:11a-f) qui communiquent avec des conduites axiales de filtrat (2a-21) disposées sur le pourtour extérieur des disques annulaires° pour le déchargement du filtrat, caractérisé en ce qu'un élément filtrant (6:1a) d'un disque de filtration (6:1) est décalé par rapport à un élément filtrant (6:2a) du disque de filtration suivant (6:2), par rapport à la direction d'écoulement dans les conduites axiales de filtrat, de sorte que, par rapport au sens de rotation, le premier élément filtrant susmentionné est avancé par rapport au deuxième élément filtrant susmentionné, et de sorte que la conduite axiale de filtrat (2a), à laquelle ces deux éléments filtrants sont reliés, est inclinée vers le bas, dans la direction d'écoulement, quand les deux éléments filtrants s'élèvent au-dessus de la surface du liquide.

2. Filtre à disques selon la revendication 1, dans lequel chaque conduite axiale de filtrat est reliée à une conduite de filtrat substantiellement radiale dans l'orifice d'écoulement du filtre, caractérisé en ce que chaque conduite radiale de filtrat (3a-31) est inclinée vers le bas, dans la direction d'écoulement, quand les éléments filtrants, reliés à la conduite axiale de filtrat associée, s'élèvent au-dessus de la surface du liquide.

## Fig. 1

## Fig. 2